# EUROPEAN PATENT APPLICATION

(11) **EP 4 198 628 A1**
(43) Date of publication of application: **21.06.2023**
(21) Application number: 20949556.3
(22) Date of filing: 14.08.2020
(51) Int. Cl.: G03B 17/56, G03B 35/08, G01B 11/245, G01B 11/25

(54) **PHOTOGRAPHING APPARATUS, PHOTOGRAPHING UNIT, IMAGE ANALYSIS APPARATUS, AND THREE-DIMENSIONAL SHAPE MEASURING SYSTEM**

(71) Applicant: NEC Corporation, 108-8001 Tokyo (JP); NEC Platforms, Ltd., Kanagawa 213-8511 (JP)
(72) Inventor: FUJIMORI Osami, Kawasaki-shi, Kanagawa 213-8511 (JP); MATSUSHIMA Takaaki, Kawasaki-shi, Kanagawa 213-8511 (JP); SAKAMOTO Shizuo, Tokyo 108-8001 (JP)
(74) Representative: Betten & Resch
(86) International application number: PCT/JP2020/030912
(87) International publication number: WO 2022/034694

(57) **Abstract**

The present invention reduces the time and effort spent on alignment in an apparatus that photographs an object from a plurality of different directions, using a plurality of cameras. The present invention comprises: a plurality of photographing units (20a, 20b) each provided with a camera; and a base (30) to which the plurality of photographing units (20a, 20b) are attached, wherein camera alignment for each of the plurality of photographing units (20a, 20b) can be adjusted independently.

## Description

### [Technical Field]

The present disclosure relates to a photographing apparatus, a photographing unit, an image analysis apparatus, and a three-dimensional shape measuring system, and more particularly, to a photographing apparatus that photographs the same object from a plurality of different directions.

### [Background Art]

In the police, medical fields, beauty industries, and the like, there is a need to generate an image of a three-dimensional shape of a human head. Therefore, a three-dimensional shape measuring system has been developed that uses a plurality of cameras to photograph an obj ect from a plurality of different directions and analyzes a plurality of pieces of obtained image data to measure a three-dimensional shape of the object with high accuracy (PTL 1). A related photographing apparatus photographs an obj ect from a plurality of different directions. A related image analysis apparatus measures a three-dimensional shape of an object based on a plurality of pieces of image data obtained by a related photographing apparatus.

Then, the related image analysis apparatus generates and outputs an image of the three-dimensional shape of the obj ect based on the measurement result. Even in a case where a moving obj ect such as a human is an objectto be measured, a plurality of cameras simultaneously or substantially simultaneously photographs the object, so that the photographing can be completed at high speed, and the three-dimensional shape of the obj ect can be measured with high accuracy.

### [Citation List]

### [Patent Literature]

[PTL 1] JP 2005-106491 A

### [Summary of Invention]

### [Technical Problem]

This disclosure aims to improve the techniques disclosed in the aforementioned prior art documents.

### [Solution to Problem]

A photographing apparatus according to an aspect of the present disclosure includes a plurality of photographing units each of which includes a camera, and a base to which the plurality of photographing units is attached, wherein the plurality of photographing units is allowed to adjust alignment of the respective cameras independently of each other.

An image analysis apparatus according to an aspect of the present disclosure includes an acquisition means configured to acquire, from the photographing apparatus, a plurality of pieces of image data obtained by the plurality of photographing units photographing a same obj ect from different directions, and a calculation means configured to calculate at least part of a three-dimensional shape of the object based on the plurality of pieces of image data.

A three-dimensional shape measuring system according to an aspect of the present disclosure includes the photographing apparatus and the image analysis apparatus.

### [Brief Description of Drawings]

Fig. 1 is an overhead view of a three-dimensional shape measuring system according to the first example embodiment when viewed from one side.
Fig. 2 is a bird's-eye view of the three-dimensional shape measuring system according to the first example embodiment when viewed from another side.
Fig. 3 is a side view of the three-dimensional shape measuring system according to the first example embodiment.
Fig. 4 is a perspective view illustrating an appearance of the photographing apparatus according to the first example embodiment.
Fig. 5 is an enlarged view of a main part of the three-dimensional shape measuring system illustrated in Fig. 1, and is a view illustrating a cross section of a center unit included in the photographing apparatus according to the first example embodiment.
Fig. 6 is a diagram illustrating an example of an image displayed on a display by the photographing apparatus according to the first example embodiment.
Fig. 7 is an enlarged view of a main part of the three-dimensional shape measuring system illustrated in Fig. 5, and is a view for explaining a method of detaching the photographing unit included in the photographing apparatus according to the first example embodiment.
Fig. 8 is a diagram illustrating a modification of the three-dimensional shape measuring system according to the first example embodiment.
Fig. 9 is a diagram illustrating a configuration of a photographing apparatus according to the second example embodiment.
Fig. 10 is a view illustrating an appearance of a photographing unit included in the photographing apparatus according to the second example embodiment.
Fig. 11 is a cross-sectional view of the photographing unit illustrated in Fig. 10.
Fig. 12 is a perspective view of a main body mounted in a housing of a photographing unit according to the third example embodiment.
Fig. 13 is a first view illustrating part of the back side of the bottom face of the main body of the photographing unit according to the third example embodiment.
Fig. 14 is a second view illustrating part of the back side of the bottom face of the main body of the photographing unit according to the third example embodiment, and is a view illustrating an example of the fitting portion.
Fig. 15 is a view illustrating part of the front side of the bottom face of the main body of the photographing unit according to the third example embodiment, and is a view illustrating a state in which the fitting portion is attached to the back side of the bottom face of the main body of the photographing unit.
Fig. 16 is a diagram illustrating adjustment of alignment in the left-right direction of the photographing unit according to the third example embodiment.
Fig. 17 is a first view illustrating a top portion of a main body of a photographing unit according to the fourth example embodiment, and is a view illustrating an example of a plurality of holes provided at the top portion of the main body.
Fig. 18 is a second view illustrating the top portion of the main body of the photographing unit according to the fourth example embodiment, and is a view illustrating a method of attaching the camera to the main body using a screw.
Fig. 19 is a third view illustrating the top portion of the main body of a photographing unit according to the fourth example embodiment, and is a view for explaining adjustment of alignment in the vertical direction.
Fig. 20 is a block diagram illustrating a configuration of an image analysis apparatus according to the fifth example embodiment.
Fig. 21 is a diagram illustrating an example of an image of an obj ect 3D model.
Fig. 22 is a block diagram illustrating a configuration of an image analysis apparatus according to the sixth example embodiment.
Fig. 23 is a block diagram illustrating a configuration of an image analysis apparatus according to a modification of the sixth example embodiment.
Fig. 24 is a diagram illustrating an example of a hardware configuration of the image analysis apparatus according to the example embodiments 5 and 6 or a modification thereof.

### [Example Embodiment]

### [First example embodiment]

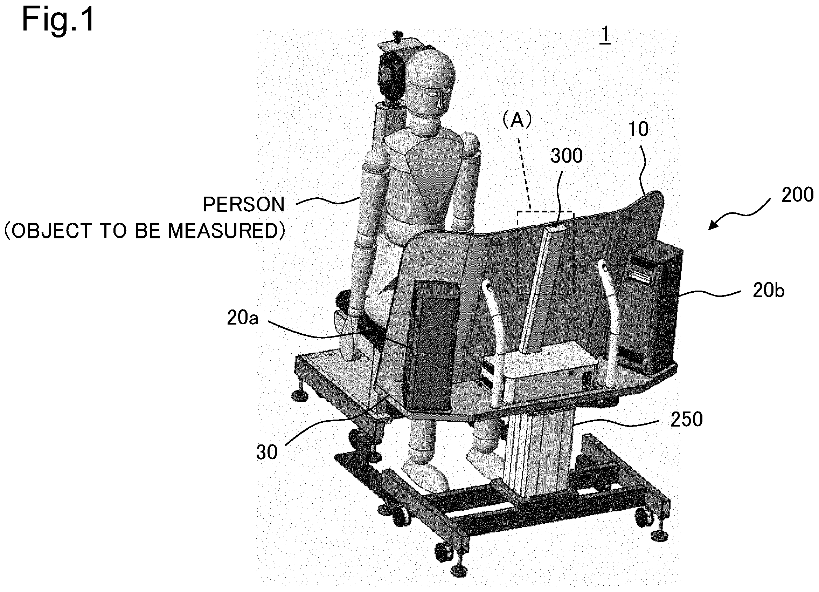

The first example embodiment will be described with reference to Figs. 1 to 7.

### (Three-dimensional shape measuring system 1)

Fig. 1 is an overhead view of a three-dimensional shape measuring system 1 according to the first present example embodiment when viewed from one side. As illustrated in Fig. 1, the three-dimensional shape measuring system 1 includes a right photographing unit 20a, a left photographing unit 20b, a base 30, and a center unit 300.

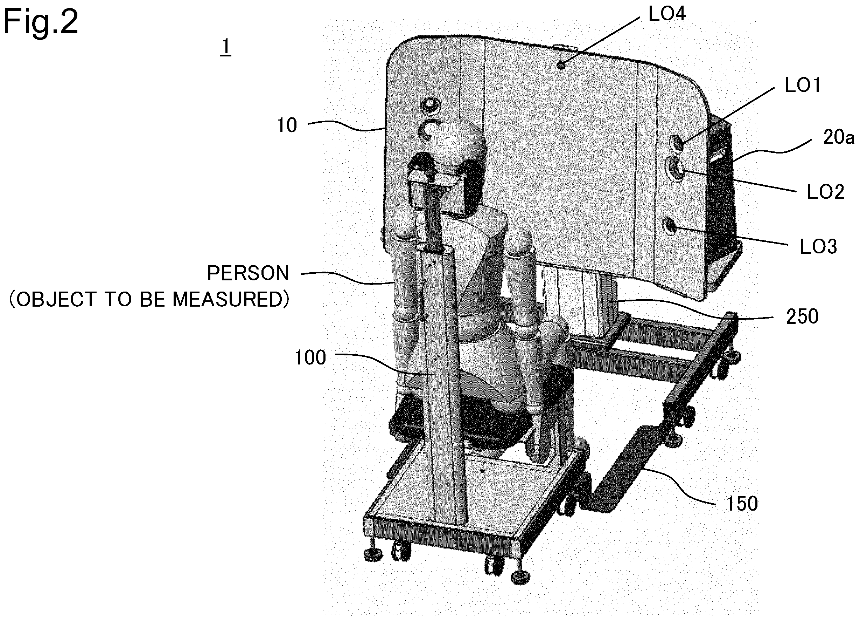

Fig. 2 is an overhead view of the three-dimensional shape measuring system 1 according to the first present example embodiment when viewed from the other side. As illustrated in Fig. 2, the three-dimensional shape measuring system 1 further includes a chair 100, a coupling member 150, a stand 250, and a shield plate 10. The shield plate 10, the right photographing unit 20a, the left photographing unit 20b, the base 30, and the center unit 300 constitute a photographing apparatus 200 according to the first present example embodiment. The configuration of the photographing apparatus 200 will be described later.

The three-dimensional shape measuring system 1 may further include an image analysis apparatus 500 described in the fifth example embodiment or an image analysis apparatus 600, 600' described in the sixth example embodiment. In this case, image data acquired by the right photographing unit 20a and the left photographing unit 20b of the photographing apparatus 200 photographing an object to be measured is transmitted to the image analysis apparatus 500, 600 or 600' via a wired or wireless network.

A person sits on the chair 100. The chair 100 includes a headrest that supports the position of the head of the person. The headrest fixes the position of the head of the person to be measured. In a case where the object to be measured is not a person but a living creature such as a dog or a snake or an obj ect including an inanimate being having a shape, the three-dimensional shape measuring system 1 may include a member that supports or fixes the living creature or the obj ect instead of the chair 100. Hereinafter, a person, a living creature other than a person, and an inanimate being are collectively referred to simply as an "object".

As illustrated in Fig. 2, the shield plate 10 is provided with a plurality of openings. The three openings LO1 to LO3 are provided in front of the right photographing unit 20a. One opening LO4 is provided at the front of the center unit 300 illustrated in Fig. 1. In Fig. 2, although hidden by a person, three openings related to the openings LO1 to LO3 are provided in the shield plate 10 in front of the left photographing unit 20b illustrated in Fig. 1.

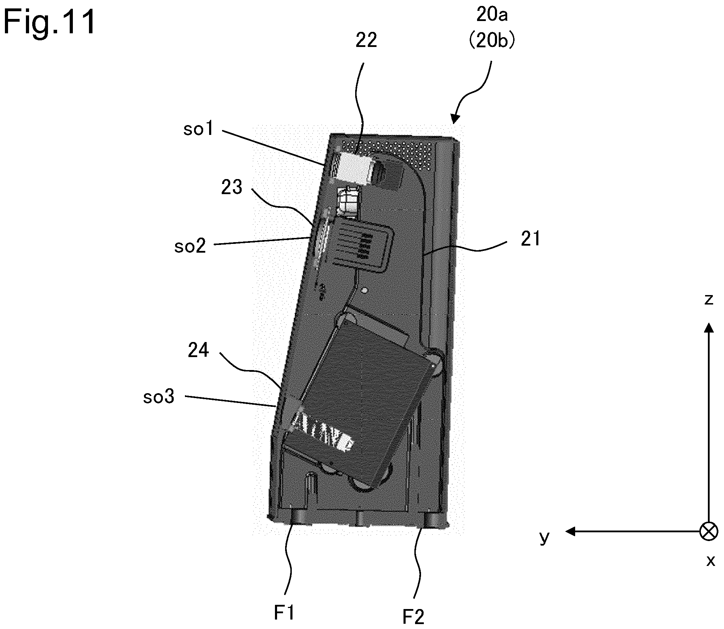

The coupling member 150 couples the chair 100 and the stand 250. The distance between the chair 100 and the stand 250 is maintained constant by the coupling member 150. The constant distance is appropriately determined, for example, according to how finely a user desires to obtain an image and according to the focal distance of a camera 22 (Fig. 11) included in the photographing apparatus 200.

The photographing apparatus 200 is placed on the stand 250. The base 30 of the photographing apparatus 200 is connected to the stand 250. The shape of the jaw of the face of the person is useful information for identifying the person. However, in the related technique, since the head of the person is photographed from the front, the jaw portion may not be shown in the image data. On the other hand, in the first present example embodiment, the height of stand 250 is set in such a way that the camera 22 of each of the right photographing unit 20a and the right photographing unit 20b photographs the head of the person slightly upward. In this way, the camera 22 can photograph up to the jaw of the face of the person.

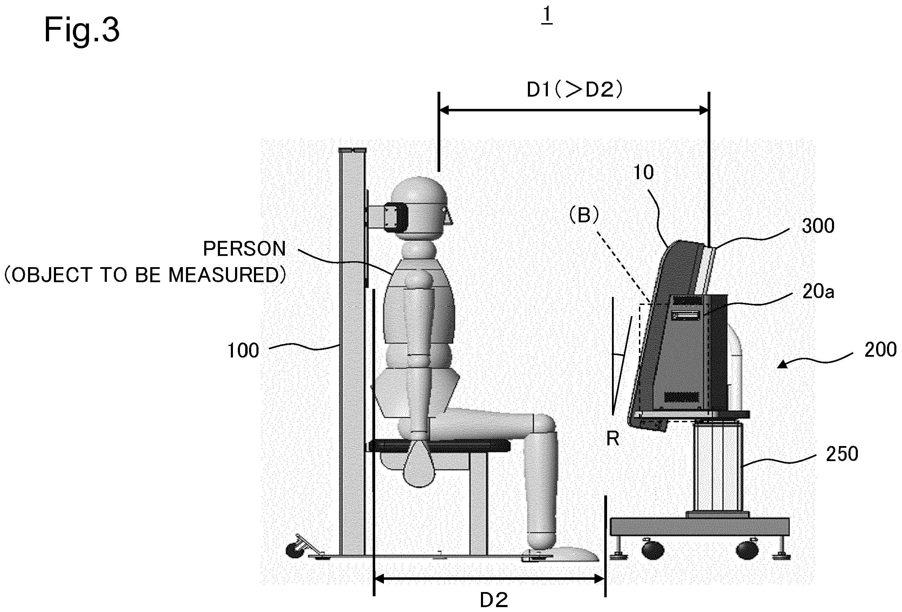

Fig. 3 is a side view of the three-dimensional shape measuring system 1 according to the first present example embodiment. In Fig. 3, two distances D1 and D2 are illustrated. The D2 represents a distance from the backrest of the chair 100 to the leg of the stand 250, and the D1 represents a distance from the head of the person to the upper end of the shield plate 10. The D1 is defined by the above-described coupling member 150.

In order to further extend the distance D1 from the head of the person to the upper end of the shield plate 10, the offset of the upper end with respect to the lower end of the shield plate 10 may be increased by increasing the inclination of the shield plate 10. In this way, the space in front of the eyes of the person can be expanded, and the oppressive feeling of the person can be alleviated. The distance D1 may be determined in such a way that even when the person extends his/her arm forward, the hand does not reach the upper end of the shield plate 10. As a result, it is possible to prevent a person from holding the upper end of the shield plate 10 and interfering with imaging by the photographing apparatus 200. The inclination of the shield plate 10 can be increased within a range in which the upper end of the shield plate 10 does not contact the photographing unit 20a (20b) behind the shield plate 10.

### (Photographing apparatus 200)

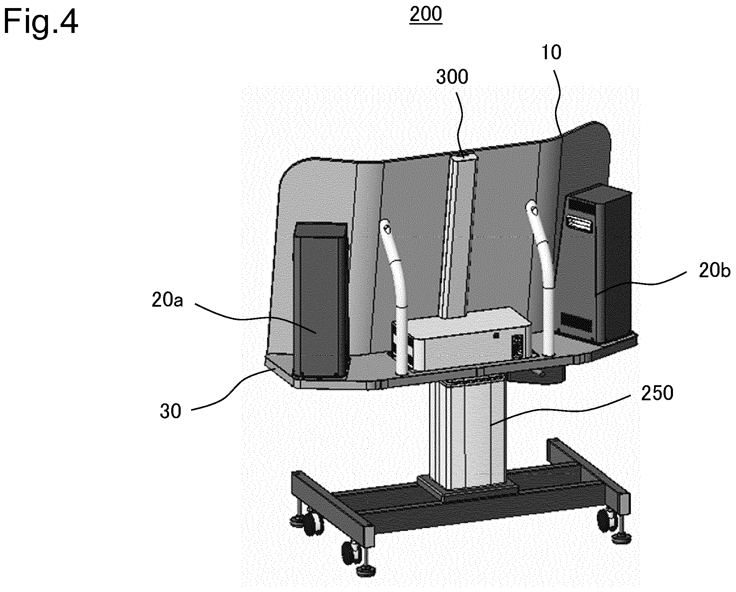

Fig. 4 is a perspective view of the photographing apparatus 200 according to the first present example embodiment. As illustrated in Fig. 4, the photographing apparatus 200 includes the shield plate 10, the right photographing unit 20a, the left photographing unit 20b, the base 30, the stand 250, and the center unit 300.

The shield plate 10 prevents a person from coming into contact with the right photographing unit 20a, the left photographing unit 20b, or the center unit 300 of the photographing apparatus 200. This is because, when an external force is applied to the right photographing unit 20a, the left photographing unit 20b, or the center unit 300, there is a possibility that these positions are displaced or the camera 22, 310 or the like is damaged.

In order to prevent or suppress the light from the ceiling illumination from being reflected by the shield plate 10 and illuminating the face of the person, the shield plate 10 is desirably formed of a material having low reflectance. In an example, the shield plate 10 is made of translucent acrylic. Since the reflectance of the shield plate 10 increases as the incident angle of light from the ceiling increases, the angle R (Fig. 3) of the inclination of the shield plate 10 with respect to the vertical direction (corresponding to the vertical direction in Fig. 3) is preferably 10 degrees or less.

Furthermore, in order to further reduce reflection of light by the shield plate 10, the surface of the shield plate 10 may be processed. For example, the surface of the shield plate 10 may be painted matte, or may be provided with an uneven structure in such a way as to diffuse light.

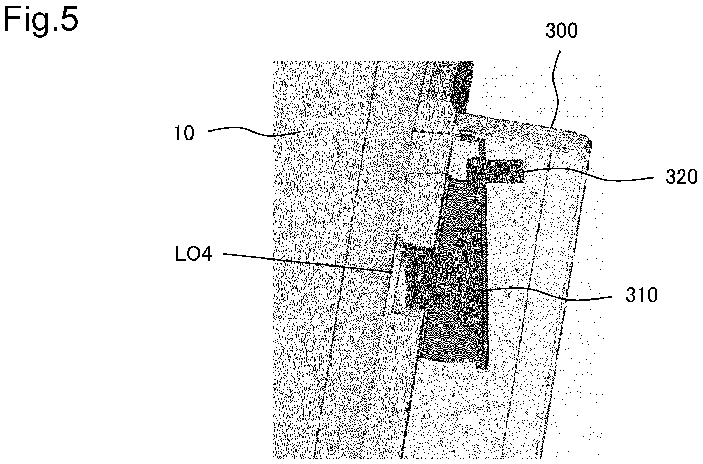

Fig. 5 is an enlarged view of a portion in a frame of a broken line denoted by reference sign (A) in Fig. 1. Fig. 5 is a view illustrating a cross section of a portion of the center unit 300.

As illustrated in Fig. 5, the center unit 300 includes a camera 310 and a light source 320. As illustrated in Fig. 1, the shield plate 10 is disposed on the front sides of the camera 310 and the light source 320.

The opening LO4 of the shield plate 10 described above is provided at a position of the shield plate 10 related to the camera lens of the camera 310. The camera 310 can photograph the head of the person through the opening LO4. The shield plate 10 is also provided with an opening for passing light from the light source 320 on the front side of the light source 320. However, Fig. 2 does not illustrate this opening. The light source 320 is, for example, a light emitting diode (LED).

The camera 310 is used by the user to confirm the position of the head of the person. The light source 320 is a so-called pilotlamp that indicates that the photographing apparatus 200 is energized (turned on), and can be used for adjusting the orientation of the head when a person seated on the chair 100 looking at the light source 320. The camera 310 captures an image of the head of a person, and the photographing apparatus 200 displays the image acquired by the camera 310 on a display (not illustrated) in real time. The user checks the position of the head of the person by viewing the image displayed on the display. Then, the user performs adjustment in such a way that the head of the person falls within a predetermined position.

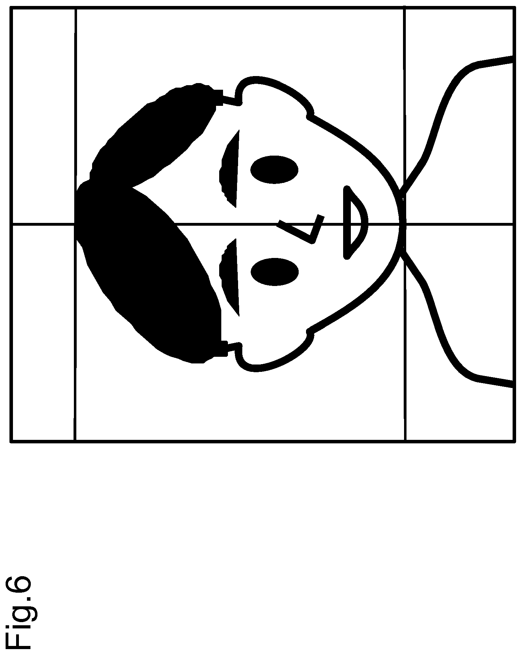

Fig. 6 illustrates an example of an image displayed on a display (not illustrated) by the photographing apparatus 200. In the image illustrated in Fig. 6, three lines are illustrated. The two lines in the lateral direction indicate the targets of the top and jaw positions of the person. One line in the longitudinal direction indicates the target of the position of the center line passing through the nose and mouth of the person.

Alternatively, the photographing apparatus 200 may display the image illustrated in Fig. 6 on a display disposed at a position where a person can visually recognize the screen while facing forward, such as on or near the shield plate 10. As a result, the person can appropriately adjust the position and the orientation of the face while checking his/her face displayed on the display.

The shield plate 10 and the center unit 300 are optional. That is, the photographing apparatus 200 may not include one or both of the shield plate 10 and the center unit 300. For example, in a case where it is unlikely that a person comes into contact with the right photographing unit 20a and the left photographing unit 20b, the photographing apparatus 200 may not include the shield plate 10. In a case where it is not necessary to position the head of the person, the photographing apparatus 200 may not include the center unit 300. A case where the photographing apparatus 200 does not include both the shield plate 10 and the center unit 300 will be described in the second example embodiment.

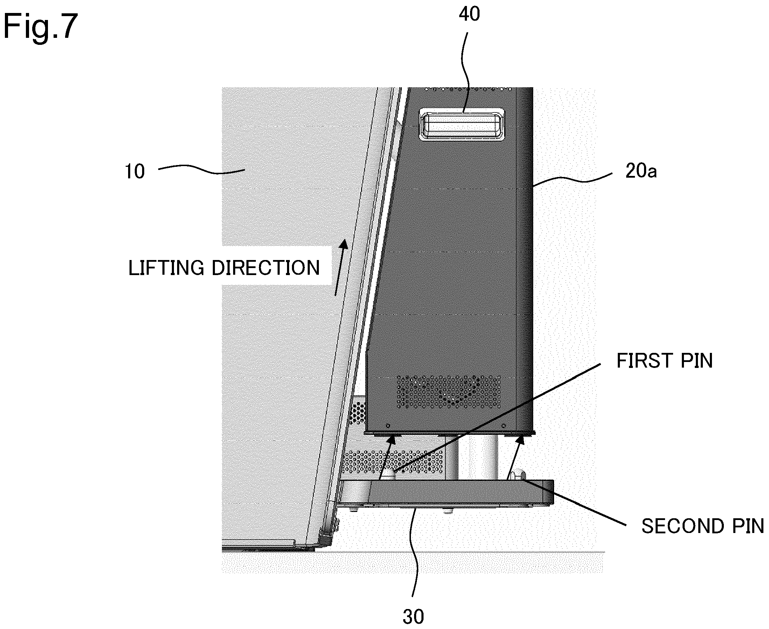

Fig. 7 is an enlarged view of a portion in a frame of a broken line denoted by reference sign (B) in Fig. 3. Fig. 7 is a view illustrating removal of the right photographing unit 20a from the base 30. The left photographing unit 20b also has a structure equivalent to that of the right photographing unit 20a described below.

As illustratedin Fig. 7, the base 30 is provided with a plurality of pins. The bottom face of the right photographing unit 20a is provided with two recesses or holes in a positional relationship related to the first pin and the second pin. The first pin and the second pin are fitted into recesses or holes provided in the bottom face of the right photographing unit 20a, whereby the right photographing unit 20a is attached to the base 30. The first pin and the second pin are used to position the right photographing unit 20a on the base 30. When the right photographing unit 20a is positioned, the position of the camera 22 included in the right photographing unit 20a is also determined. The housing of the right photographing unit 20a includes a handle 40 used by the user to carry the right photographing unit 20a.

As indicated by an arrow in Fig. 7, the user can remove the right photographing unit 20a from the base 30 by lifting the right photographing unit 20a obliquely rearward (arrow in Fig. 7). Conversely, the user can attach the right photographing unit 20a to the base 30 by bringing the right photographing unit 20a close to the base 30 in such a way that the recesses or holes provided in the bottom face of the right photographing unit 20a are fitted to the first pin and the second pin of the base 30. The relationship between the left photographing unit 20b and the base 30 is the same as the relationship between the right photographing unit 20a and the base 30, and the left photographing unit 20b can be removed from and attached to the base 30 in a similar manner.

As described above, in the photographing apparatus 200 according to the first present example embodiment, the right photographing unit 20a and the left photographing unit 20b can be detached from the base 30 or attached to the base 30 independently of each other. Therefore, when the camera 22 (Fig. 11) of the right photographing unit 20a (or the left photographing unit 20b) fails, the user can remove only the right photographing unit 20a (or the left photographing unit 20b) including the failed camera 22 from the base 30. This configuration is advantageous, compared with a configuration in which a plurality of cameras is integrated into one photographing unit. This is because, in a case where a plurality of cameras is integrated into one photographing unit, the size of the photographing unit has to be increased, and thus, user's convenience regarding repair or replacement of the camera is poor. In such a configuration, when the photographing unit is attached to the base after one camera is repaired or replaced, alignment of a plurality of cameras included in the photographing unit is required to be adjusted.

In the photographing apparatus 200 according to the first present example embodiment, in a case where it is necessary to readjust the alignment of the camera 22 of the right photographing unit 20a (or the left photographing unit 20b), only the right photographing unit 20a (or the left photographing unit 20b) is removed from the base 30, and the alignment of the camera 22 is allowedto be adjusted. That is, in the photographing apparatus 200 according to the first present example embodiment, the plurality of photographing units (20a, 20b) is allowed to adjust the alignment of the camera 22 independently of each other.

### (Modification)

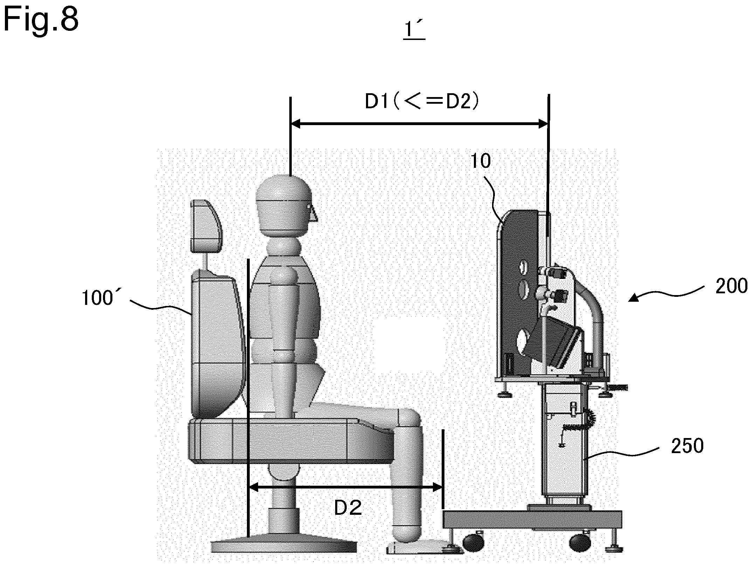

A three-dimensional shape measuring system 1', which is a modification of the three-dimensional shape measuring system 1 according to the first example embodiment, will be described with reference to Fig. 8.

As described above, the D1 represents a distance from the head of the person to the upper end of the shield plate 10. The D2 represents a distance from the backrest of a chair 100' to the leg of the stand 250.

As illustrated in Fig. 8, in the three-dimensional shape measuring system 1' according to the present modification, the shield plate 10 is substantially parallel to the axial direction of the stand 250. In this respect, the three-dimensional shape measuring system 1' according to the present modification is different from the three-dimensional shape measuring system 1 according to the first example embodiment.

In the three-dimensional shape measuring system 1 according to the first example embodiment, D1 > D2. This means that the space in front of the person to be measured is wider at a position close to the face than at the feet of the person. Therefore, there is an advantage that the less oppressive feeling given to the person. On the other hand, the three-dimensional shape measuring system 1' according to the present modification satisfies the relationship D1 < = D2. That is, in the three-dimensional shape measuring system 1' according to the present modification, the distance D1 from the head of the person to the upper end of the shield plate 10 is shorter than that in the three-dimensional shape measuring system 1 according to the first example embodiment illustrated in Fig. 3.

An advantage of the present modification is that the user can easily perform maintenance work. In the configuration of the present modification, since the shield plate 10 is not inclined rearward, the user can lift the right photographing unit 20a and the left photographing unit 20b directly upward without paying much attention to contact with the shield plate 10.

### [Second example embodiment]

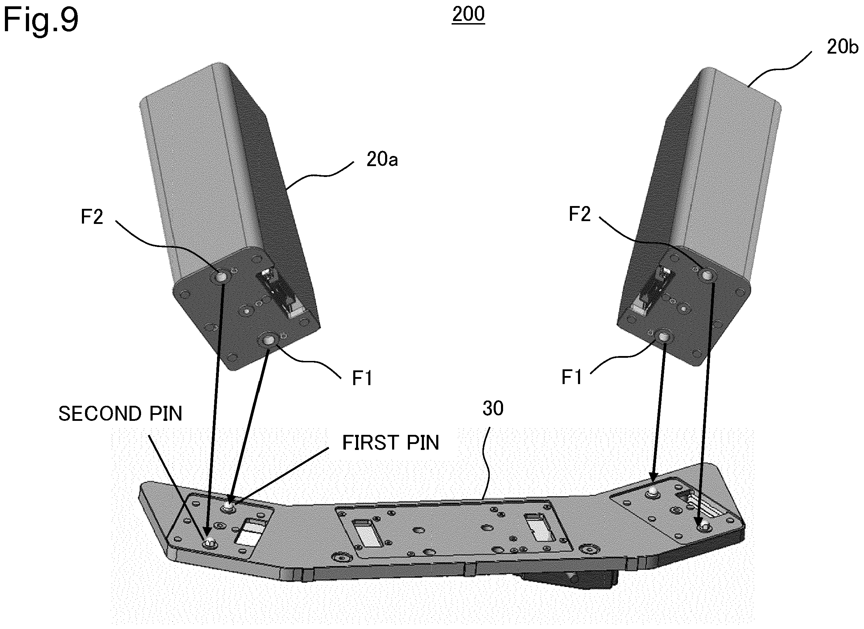

The second example embodiment will be described with reference to Figs. 9 to 11. In the second present example embodiment, an example of the photographing apparatus 200 applied to the three-dimensional shape measuring system 1 according to the first example embodiment will be described.

### (Photographing apparatus 200)

Fig. 9 is a diagram illustrating a configuration of the photographing apparatus 200 according to the second present example embodiment. As illustrated in Fig. 9, the photographing apparatus 200 according to the second present example embodiment includes the right photographing unit 20a, the left photographing unit 20b, and the base 30. The photographing apparatus 200 according to the second present example embodiment is different from the photographing apparatus 200 according to the first example embodiment in that the center unit 300 is not provided.

As illustrated in Fig. 9, right photographing unit 20a is positioned on the base 30 by two pins provided on the base 30. That is, the bottom face of the right photographing unit 20a is provided with two recesses or holes indicated by reference signs F1 and F2, and the recesses or holes F1 and F2 are fitted with the first pin and the second pin, respectively, so that the right photographing unit 20a does not move in the in-plane direction of the base 30.

Similarly, the left photographing unit 20b is positioned on the base 30 by the other two pins provided on the base 30.

It is meaningful that the right photographing unit 20a is positioned by a set of two pins instead of one pin. A set of two pins determine the position and orientation of the right photographing unit 20a. That is, the positions of the two pins define the position of the right photographing unit 20a on the face of the base 30, and the direction of the straight line passing through the two pins defines the orientation of the right photographing unit 20a on the face of the base 30. Similarly, the left photographing unit 20b is oriented by a set of the other two pins provided on the base 30. The user is only required to align the two recesses or holes provided in the bottom face of the right photographing unit 20a or the left photographing unit 20b with a set of the other two pins provided in the base 30 and fit them. Therefore, the user does not have to adjust the orientations of the right photographing unit 20a and the left photographing unit 20b.

The movement of the right photographing unit 20a and the left photographing unit 20b in the upward direction (the direction away from the base 30) is not limited by the pins. Therefore, it is easy to remove the right photographing unit 20a and the left photographing unit 20b from the base 30. The user is only required to lift the right photographing unit 20a and the left photographing unit 20b obliquely backward.

### (Photographing unit 20a (20b))

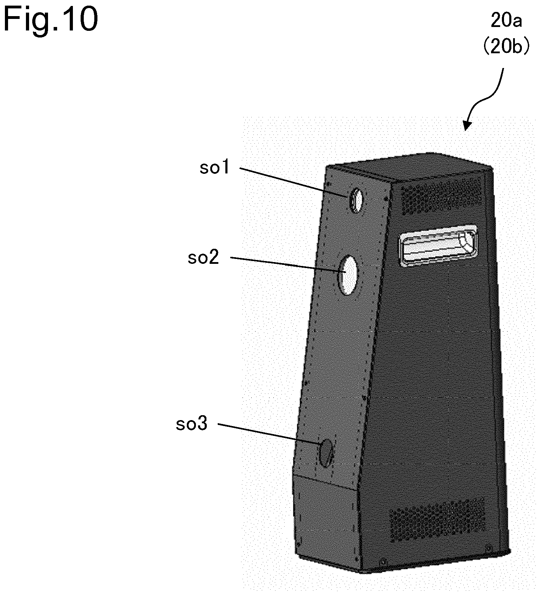

The photographing unit 20a (20b) will be described with reference to Figs. 10 to 11. Here, the "photographing unit 20a (20b)" means the right photographing unit 20a or the left photographing unit 20b. A configuration common to the right photographing unit 20a or the left photographing unit 20b will be described as the "photographing unit 20a (20b)".

Fig. 10 is an external view of the photographing unit 20a (20b). As illustrated in Fig. 10, the housing of the photographing unit 20a (20b) has three openings so1 to so3.

Fig. 11 is a cross-sectional view of the photographing unit 20a (20b) illustrated in Fig. 10. As illustrated in Fig. 11, a main body 21 of the photographing unit 20a (20b) is stored in a housing of the photographing unit 20a (20b). The camera 22, a light source 23, and a projector 24 are attached to the main body 21. The positions of the openings so1 to so3 of the housing are related to the positions of the camera 22, the light source 23, and the projector 24.

Furthermore, the positions of the three openings so1 to so3 of the photographing unit 20a (20b) are related to the positions of the openings LO1 to LO3 of the shield plate 10 described in the first example embodiment. That is, in a case where the photographing unit 20a (20b) according to the second present example embodiment is applied to the three-dimensional shape measuring system 1 according to the first example embodiment, the openings so1 to so3 of the right photographing unit 20a overlap the openings LO1 to LO3 of the shield plate 10 illustrated in Fig. 1.

Therefore, the camera 22 of the photographing unit 20a (20b) can photograph the head of the person through the opening so1 of the housing and the opening LO1 of the shield plate. The light source 23 of the photographing unit 20a (20b) irradiates the head of the person through the opening so2 of the housing and the opening LO2 of the shield plate. The projector 24 of the photographing unit 20a (20b) projects a light pattern onto the head of the person through the opening so3 of the housing and the opening LO2 of the shield plate.

By irradiating the obj ectwith light from the light source 23, the object can be clearly photographed even in a dark environment. Specifically, an image with small noise (S/N ratio) can be acquired by adapting the wavelength range of the light to be emitted to the wavelength range of the spectrum to be captured.

The pattern of light projected onto the obj ect by the projector 24 changes to a shape along the surface of the obj ect on the surface of the object. Therefore, it is possible to calculate the three-dimensional shape of the object based on the changed shape. As a three-dimensional shape analysis method using a light pattern projected by the projector 24, in an example, a technique related to the technique disclosedin PTL 1 can be applied.

Of the components of the photographing unit 20a (20b) described above, neither the light source 23 nor the projector24 is essential. That is, the photographing unit 20a (20b) may not include one of the light source 23 and the projector 24 or may include neither of them.

### (Alignment adjustment)

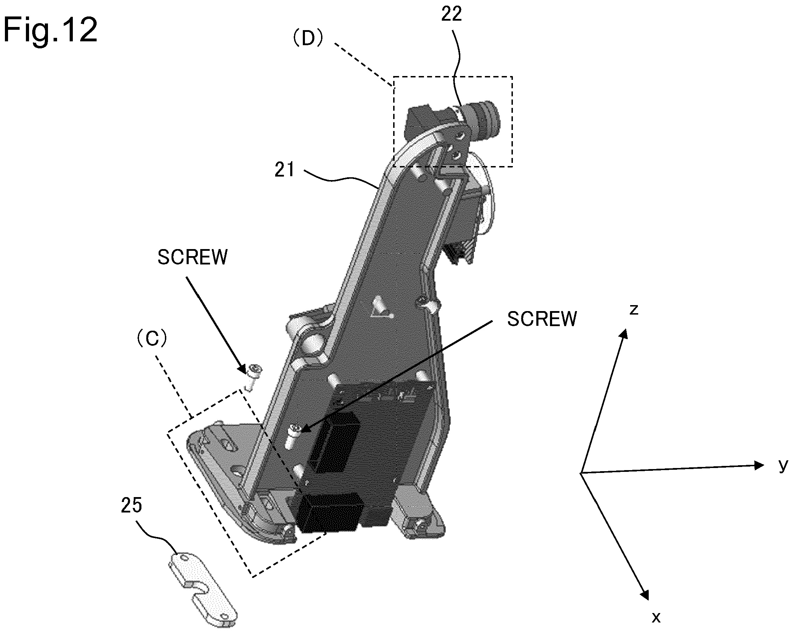

Here, the positioning (alignment adjustment) of the camera 22 included in the photographing unit 20a (20) will be described. The xyz coordinate system illustrated in Fig. 11 is equivalent to the xyz coordinate system illustrated in Fig. 12 described below.

In the related technique described in PTL 1, positions and orientations of a plurality of cameras are adjusted in advance and then fixed to a support member. An external force such as an impact may cause the position or orientation of any of the cameras to deviate or cause a failure in any of the cameras. In such a case, it is necessary to move the plurality of cameras together with the support member in order to repair or replace one camera. Therefore, the alignment of the plurality of cameras is required to be adjusted again.

On the other hand, the photographing unit 20a and the photographing unit 20b are allowed to adjust the alignment of the camera 22 independently of each other. In an example, the photographing unit 20a (20b) includes the main body 21 connected to the base 30, the camera 22 is fixed to the main body 21, and the orientation of the camera 22 is adjusted with reference to the base 30.

Since the plurality of photographing units 20a and 20b is both attached to the base 30, it can be said that the plurality of photographing units 20a and 20b share a coordinate system. With the base 30 as a reference, it is possible to save time and effort to determine a common coordinate system before the orientations of the cameras 22 of the plurality of photographing units 20a and 20b are independently adjusted.

The specific examples of alignment adjustment will be described in the following example embodiments 3 and 4. In an example, the photographing unit 20a (20b) of the photographing apparatus 200 may include one or both of the structures in which alignment adjustment described in the third example embodiment and the fourth example embodiment is implement.

### [Third example embodiment]

The third example embodiment will be described with reference to Figs. 12 to 16. In the third present example embodiment, a specific example of alignment adjustment described in the second example embodiment will be described.

In the third present example embodiment, a fitting means to be fitted to the base 30 is attached to the main body 21 of the photographing unit 20a (20b), and there is a clearance at a position of the main body 21 to which the fitting means can be attached. The orientation of the photographing unit 20a (20b) is allowedto be adjusted on the base 30 by changing the position of the fitting means attached to the main body 21.

When the fitting means attached to the main body 21 is fitted to the base 30, the photographing unit 20a (20b) is positioned. Since there is a clearance at the position of the main body 21 to which the fitting means can be attached, the orientation of the photographing unit 20a (20b) is allowedto be adjusted by changing the position of the fitting means within this clearance. Specifically, the position of the fitting means is allowed to be adjusted in such a way as to change the orientation of the camera 22 fixed to the main body 21 of the photographing unit 20a (20b). That is, the orientation of the camera 22 is allowed to be adjusted by adjusting the position of the fitting means.

Hereinafter, an example of a configuration of the third present example embodiment will be described in detail.

### (Left-right direction alignment)

Fig. 12 illustrates an external appearance of the main body 21 of the photographing unit 20a (20b) illustrated in Fig. 11. However, in Fig. 12, the direction of the y axis is reversed from that in Fig. 11. Fig. 12 also illustrates a fitting portion 25 to be attached to the bottom face of the main body 21. The fitting portion 25 is an example of the fitting means described above.

First, a procedure for adjusting the orientation of the camera 22 in the positive and negative directions of the x axis, that is, the left-right direction when the positive direction of the y axis is the front direction will be described.

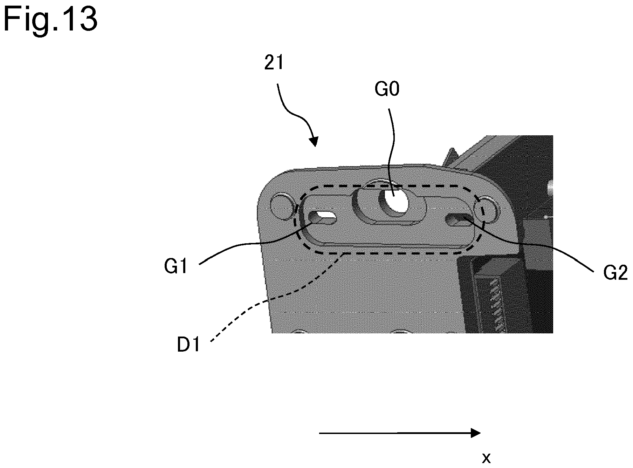

Fig. 13 is a view of a portion in a frame of a broken line denoted by reference sign (C) in Fig. 12 when viewed from a lower side (bottom face side) of the main body 21. As indicated by a dashed box in Fig. 13, the bottom face of the main body 21 has an elliptical recess D1. Three holes G0 to G2 are disposed side by side in the recess D1. Among them, the middle hole G0 is circular and large, and the two holes G1 and G2 on both sides thereof are narrow and small. However, the shape and arrangement of these three holes G0 to G2 are not critical. The second pin of a set of two pins of the base 30 illustrated in Fig. 9 is inserted into the middle hole G0. The diameter of the middle hole G0 is larger than the thickness of the second pin. Therefore, when the second pin is inserted into the middle hole G0, the second pin can move in the hole G0.

The shape and arrangement of the three holes G0-G2 of the main body 21 illustrated in Fig. 13 is merely an example. These holes G0 to G2 may have any shape and arrangement. Further, as will be described later, the holes G1 and G2 are provided as screw holes for inserting screws into the fitting portion 25. On the other hand, when the fitting portion 25 is attached to the main body 21 by means other than screws, the holes G1 and G2 are unnecessary.

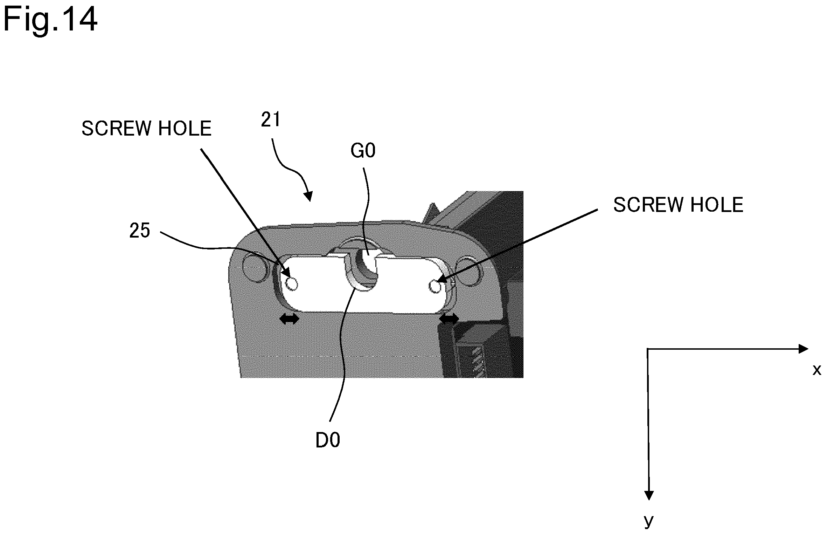

As in Fig. 13, Fig. 14 is a view of the main body 21 when viewed from the bottom face side. In Fig. 14, the fitting portion 25 is inserted into the recessD1 (Fig. 13) providedin the bottom face of the main body 21. The fitting portion 25 has a shape in which a half-moon shaped cut-out D0 is formed on a rectangular plate having round corners. The half-moon shaped cut-out D0 and the hole G0 in the bottom face of the main body 21 partially overlap each other, so that a function related to the depression or the hole F2 (Fig. 9) of the second example embodiment is implemented. That is, the main body 21 is positioned by fitting the second pin of the base 30 to the hole formed by the cut-out D0 and the hole G0. The position of the hole G0 at the center of the bottom face of the main body 21 is related to the position of the cut-out D0 of the fitting portion 25. The fitting portion 25 is slightly smaller in the x-axis direction (left-right direction) than the recess D1 in the bottom face of the main body 21 into which the fitting portion 25 is inserted. Therefore, the fitting portion 25 can move in the positive and negative directions of the x axis in the recessD1. The fitting portion 25 can be attached anywhere in the recess D1 by being fixed to the main body 21 by a method described later. In other words, there is a clearance at the position of the main body 21 to which the fitting portion 25 can be attached. In Fig. 14, the clearance at the position of the main body 21 to which the fitting portion 25 can be attached is indicated by two double-headed arrows.

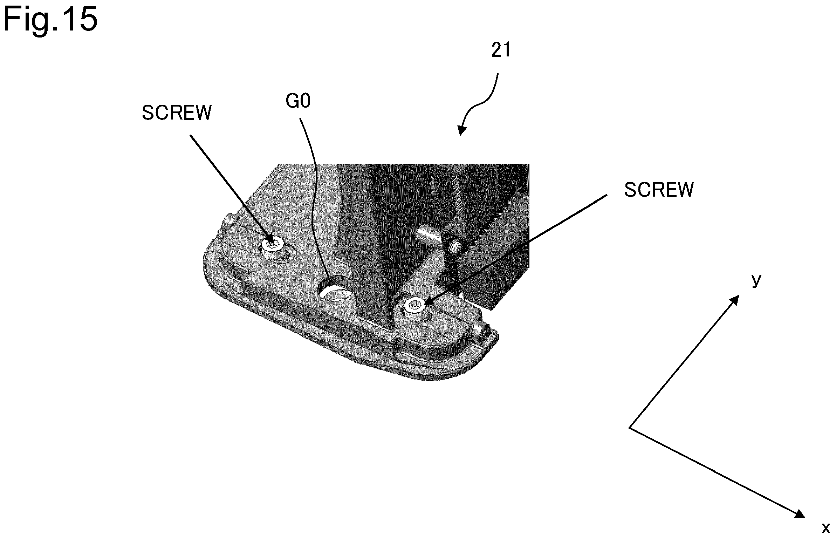

Fig. 15 is a view of a portion in a frame of a broken line denoted by reference sign (C) in Fig. 12 when viewed from the upper side of the main body 21. In Fig. 15, screws are passed through two holes on both sides of the hole G0 in the bottom face of the main body 21. The screw is inserted into the fitting portion 25 attached to the bottom face of the main body 21. However, before the alignment adjustment described later is performed, the screw is temporarily fixed, and the fitting portion 25 can freely move in the recess D1 of the bottom face of the main body 21.

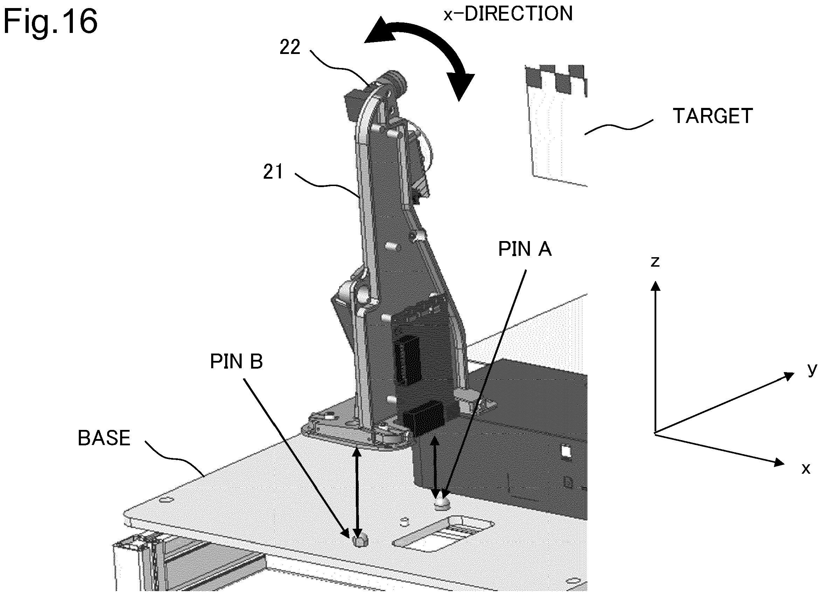

An example of an alignment adjustment method will be described with reference to Fig. 16. As illustrated in Fig. 16, a target (also referred to as an alignment mark) is disposed in front of the main body 21 (in the positive direction of the y axis). A set of two pins A and B is provided on the base for alignment adjustment. These pins A and B simulate the first pin and the second pin (Fig. 3) of the base 30. That is, the shape and size of the pin A are equal to the shape and size of the first pin of the base 30. The shape and size of the pin B are equal to the shape and size of the second pin of the base 30. The distance between the pin A and the pin B is equal to the distance between the first pin and the second pin.

The user first fits the bottom face of the main body 21 to the pins A and B. The pin A is fitted into a recess or hole F1 (Fig. 11) provided in the bottom face of the main body 21, and the pin B is fitted into the fitting portion 25 illustrated in Fig. 14. Then, while referring to the image of the target captured by the camera 22, the user rotates the main body 21 in the positive or negative directions of the x axis with the pin A as a fulcrum and the y axis as a central axis in such a way that the optical axis of the camera lens of the camera 22 matches the center of the target. At this time, the fitting portion 25 attached to the bottom face of the main body 21 moves in a direction opposite to a direction in which the user rotates the main body in the recess D1 of the bottom face of the main body 21. After the optical axis of the camera lens of the camera 22 matches the center of the target in the left-right direction, the user tightens the screw (Fig. 15) inserted into the fitting portion 25 through the main body 21 to fix the position of the fitting portion 25. In this way, the adjustment of the alignment in the left-right direction is completed.

The central axis of rotation of the main body 21 preferably passes through the pin A and the camera 22. That is, the pin A, which is a fulcrum of rotation, is preferably installed directly below the camera 22. As a result, when the main body 21 is rotated around the central axis, the position of the camera 22 in the positive and negative directions of the x axis (left-right direction) does not change, so that the alignment in the left-right direction can be easily adjusted.

### [Fourth example embodiment]

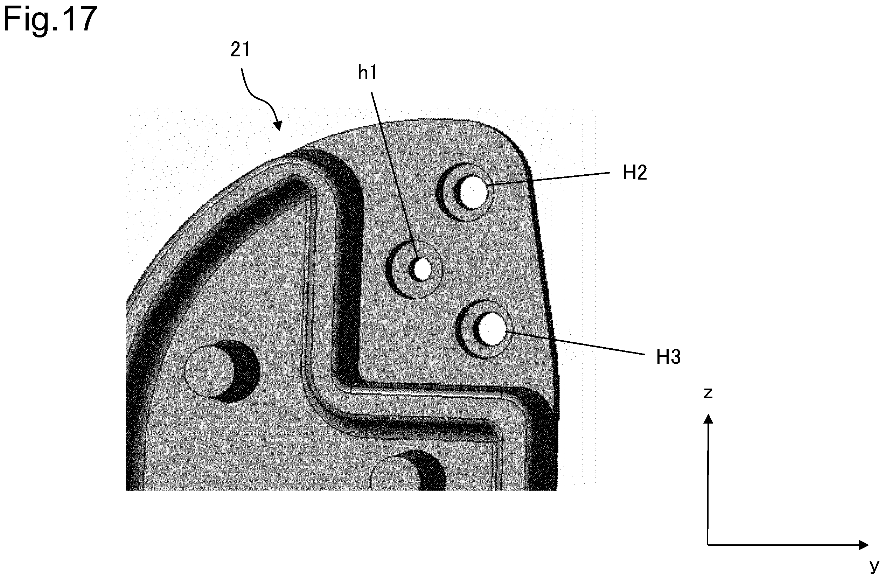

The fourth example embodiment will be described with reference to Figs. 17 to 19. In the fourth present example embodiment, a specific example of alignment adjustment described in the second example embodiment will be described.

In the fourth present example embodiment, the main body 21 of the photographing unit 20a (20b) is provided with a plurality of screw holes, the camera 22 is fixed to the main body 21 by inserting screws (tips of bolts) into the camera 22 through the plurality of screw holes, and the diameter of at least one screw hole is larger than the thickness of the screw passed through the screw hole. After inserting screws into the camera 22 and temporarily fixing the camera 22 to the main body 21, the orientation of the camera 22 is allowed to be adjusted by moving the screws within the range of the diameter of the screw holes. Here, the "photographing unit 20a (20b)" means the right photographing unit 20a or the left photographing unit 20b.

A diameter of at least one of the plurality of screw holes provided in the main body 21 of the photographing unit 20a (20b) is larger than a thickness of the screw. This means that the screw can be freely moved in the screw hole. When the position of the screw is determined, the orientation of the camera 22 in the z-axis direction (that is, the vertical direction when the positive direction of the y-axis is the front direction) is determined. That is, the alignment of the camera 22 is allowedto be adjusted by moving the position of the screw. After positioning the screw, the screw is tightly fastened, so that the movement of the screw can be stopped by friction between the head of the screw and the main body.

Hereinafter, an example of a configuration of the fourth present example embodiment will be described in detail.

### (Vertical direction alignment)

Secondly, a procedure for adjusting the orientation of the camera 22 in the positive and negative directions of the z axis, that is, the vertical direction when the positive direction of the y axis is the front direction will be described.

Fig. 17 is a view of a portion in a frame of a broken line denoted by reference sign (D) in Fig. 12 when viewed from the right side (negative direction of the x axis) of the main body 21. As illustrated in Fig. 17, the main body 21 is provided with three screw holes. The diameter of a first screw hole h1 is equal to the thickness of the screw passing therethrough. On the other hand, the diameters of a second screw hole H2 and a third screw hole H3 are larger than the thickness of the screw passing therethrough. In Fig. 17, the second screw hole H2 and the third screw hole H3 are drawn larger than the first screw hole h1. This is because it is assumed as an example that screws having the same thickness pass through the first screw hole h1, the second screw hole H2, and the third screw hole H3.

However, the second screw hole H2 and the third screw hole H3 are not necessarily larger than the first screw hole h1. For example, the thickness of the screw passing through the second screw hole H2 and the third screw hole H3 may be smaller than the thickness of the screw passing through the first screw hole h1. In this case, a size relationship between the first screw hole h1, and the second screw hole H2 and the third screw hole H3 is not limited.

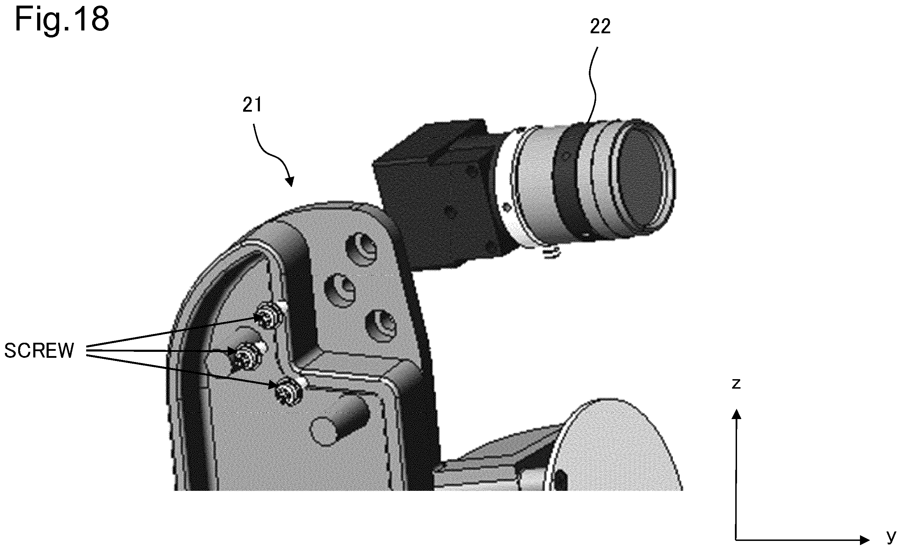

As illustrated in Fig. 18, tips of three screws protruding from the three screw holes are inserted into the related three screw holes of the camera 22 using screws from one sides of the first screw hole h1 and the second to third screw holes H2 and H3. As described above, in the fourth present example embodiment, the thickness of the screw passing through the first screw hole h1 is equal to the thicknesses of the screws passing through the second screw hole H2 and the third screw hole H3. The head of the screw is sufficiently large so as not to pass through the first screw hole h1 and the second screw hole H2 and the third screw hole H3.

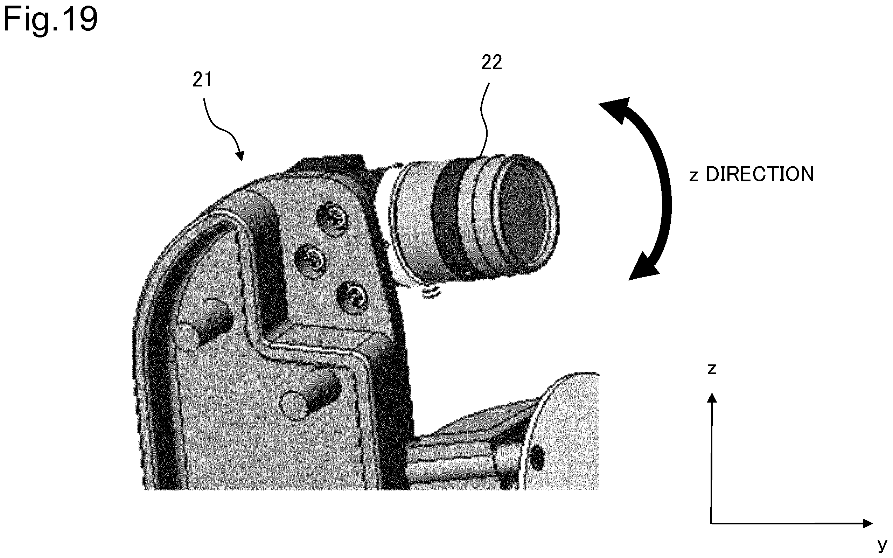

Fig. 19 illustrates a state in which the camera 22 is temporarily fixed by three screws. Since the diameter of each of the second screw hole H2 and the third screw hole H3 is larger than the thickness of the screw, the camera 22 can move in the z-axis direction around the first screw hole h1, that is, in the vertical direction when the positive direction of the y-axis is the front direction.

Thereafter, the user performs alignment adjustment by a procedure illustrated in Fig. 16. That is, after the optical axis of the camera lens of the camera 22 matches the center of the target in the vertical direction, the user fixes the position of the camera 22 by tightening three screws (Fig. 19) inserted into the camera 22. In this way, the alignment adjustment is completed.

### [Fifth example embodiment]

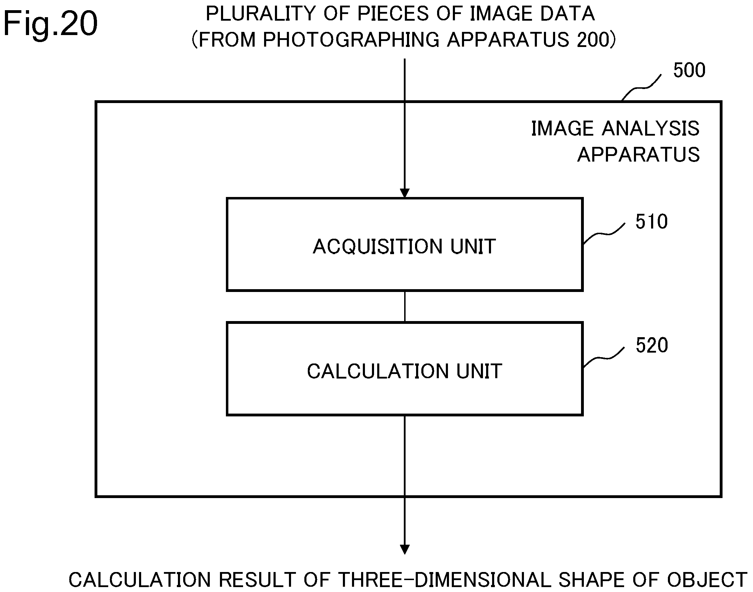

The fifth example embodiment will be described with reference to Figs. 20 to 21. In the fifth present example embodiment, the image analysis apparatus 500 that acquires and analyzes a plurality of pieces of image data from the right photographing unit 20a and the left photographing unit 20b of the photographing apparatus 200 described in the first to fourth example embodiments will be described. The image analysis apparatus 500 according to the fifth present example embodiment may be included in the three-dimensional shape measuring system 1 (Fig. 1) described in the first example embodiment. That is, the image analysis apparatus 500 may be a component of the three-dimensional shape measuring system 1.

### (Image analysis apparatus 500)

Fig. 20 is a block diagram illustrating a configuration of the image analysis apparatus 500 according to the fifth present example embodiment. As illustrated in Fig. 20, the image analysis apparatus 500 includes an acquisition unit 510 and a calculation unit 520.

The acquisition unit 510 acquires, from the photographing apparatus 200 (Fig. 1 or 9), a plurality of pieces of image data when a plurality of photographing units including the right photographing unit 20a and the left photographing unit 20b photographs the same object from different directions. The acquisition unit 510 is an example of the acquisition means.

In an example, the acquisitionunit 510 connects communication with the photographing apparatus 200 using a communication unit (not illustrated) (installed on the back face of the base 30). The plurality of pieces of image data acquired by the right photographing unit 20a and the left photographing unit 20b is transmitted from the photographing apparatus 200 via the network. The acquisition unit 510 receives a plurality of pieces of image data transmitted from the photographing apparatus 200.

The acquisitionunit 510 outputs the plurality of pieces of acquired image data to the calculation unit 520.

The calculation unit 520 calculates at least part of the three-dimensional shape of the obj ect (in an example, the head of the person) based on the plurality of pieces of image data. The calculation unit 520 is an example of the calculation means.

In an example, the calculation unit 520 calculates the distance from the reference position (for example, the midpoint between the right photographing unit 20a and the left photographing unit 20b) to the measurement point based on the parallax between the measurement point on the image data acquired by the right photographing unit 20a and the same measurement point on the image data acquired by the left photographing unit 20b. The calculation unit 520 calculates at leastpart of the three-dimensional shape of the object by mapping a plurality of measurement points on the obj ect appearing in the image data and calculating the distance to each measurement point by the above-described method.

As illustratedin Fig. 20, the calculationunit 520 may output the calculation result of the three-dimensional shape of the object to a display or the like. In an example, the calculation result of the three-dimensional shape of the object includes data of the 3D model regarding changes in the appearance of the obj ect when the obj ect is viewed from various directions. Alternatively, the calculation unit 520 may store the calculation result of the three-dimensional shape of the obj ect in a storage device (not illustrated).

In a case where the right photographing unit 20a and the left photographing unit 20b include the projector 24 (Fig. 11) described in the second example embodiment, the calculation unit 520 can calculate the three-dimensional shape of the object by a three-dimensional shape analysis method using the light pattern projected by the projector24. (one example; 3D model image)

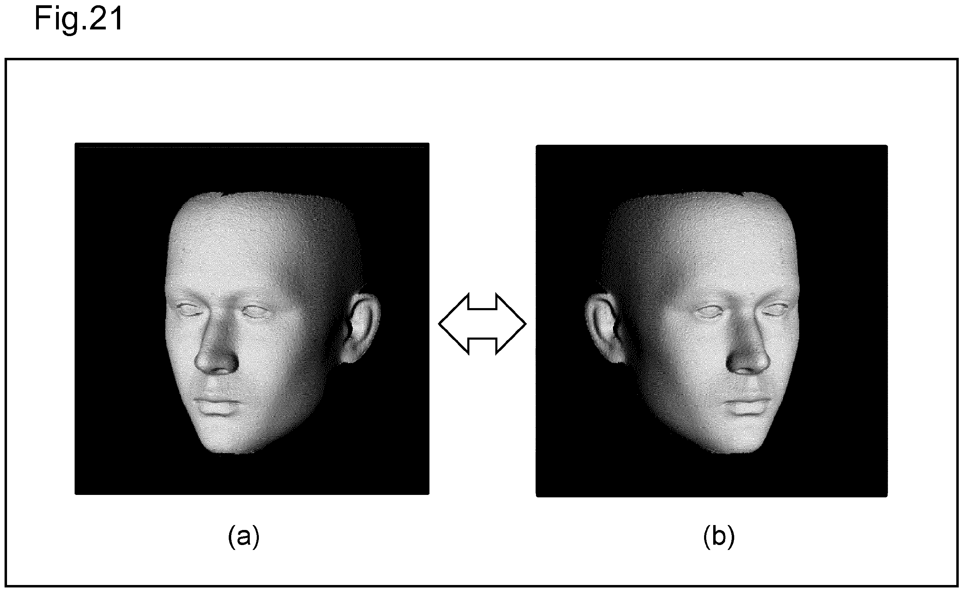

Fig. 21 illustrates an example of display based on the calculation result of the calculation unit 520. Here, the object to be measured is the head of the person. In the example of the display illustratedin Fig. 21, the head of the person (that is, the objectto be measured) is reproducedas an image of a 3D model. In the display illustrated as (a) of Fig. 21, the left side of the head of the person is mainly displayed. In the display illustrated as (b) of Fig. 21, the right side of the head of the person is mainly displayed. The image of the 3D model of the head of the person may be transitionable between the display illustrated as (a) of Fig. 21 and the display illustrated as (b) of Fig. 21 by the input operation of the user.

### [Sixth example embodiment]

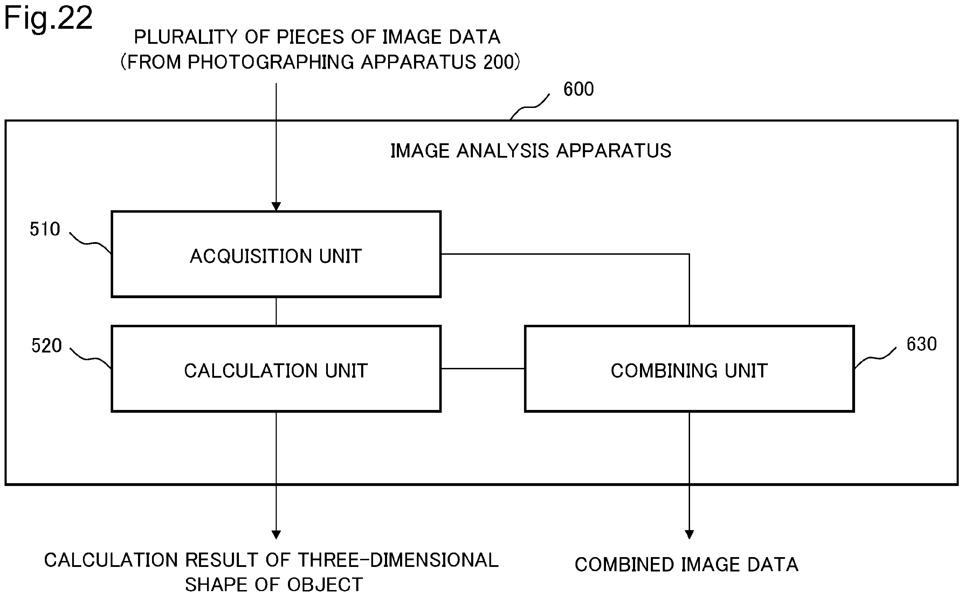

The sixth example embodiment will be described with reference to Figs. 22 to 23. In the sixth present example embodiment, an image analysis apparatus 600 that acquires and analyzes a plurality of pieces of image data from the right photographing unit 20a and the left photographing unit 20b of the photographing apparatus 200 described in the first to fourth example embodiments, and an image analysis apparatus 600' as a modification thereof will be described. The image analysis apparatus 600 according to the sixth present example embodiment or the image analysis apparatus 600' according to a modification thereof may be included in the three-dimensional shape measuring system 1 (Fig. 1) described in the first example embodiment. That is, the image analysis apparatus 600, 600' may be a component of the three-dimensional shape measuring system 1.

### (Image analysis apparatus 600)

Fig. 22 is a block diagram illustrating a configuration of the image analysis apparatus 600 according to the sixth present example embodiment. As illustrated in Fig. 22, the image analysis apparatus 600 further includes a combining unit 630 in addition to the acquisition unit 510 and the calculation unit 520. The image analysis apparatus 600 according to the sixth present example embodiment is different from the image analysis apparatus 500 according to the fifth example embodiment in that it further includes the combining unit 630.

The description of the acquisition unit 510 and the calculation unit 520 in the fifth example embodiment is cited, and the description thereof will be omitted here.

The combining unit 630 combines the plurality of pieces of image data to generate image data indicating at least part of the three-dimensional shape of the object. The combining unit 630 is an example of the combining means.

By photographing the same object from different directions, a plurality of pieces of image data can be obtained. By combining these pieces of image data, image data indicating at least part of the three-dimensional shape of the object can be obtained. By using the combined image data, for example, the obj ect can be accurately identified regardless of the orientation of the obj ect.

In an example, the combining unit 630 uses a known image technology such as integral photography. The combining unit 630 receives, from the acquisition unit 5 10, a plurality of pieces of image data obtained by photographing the same obj ect from different directions and acquires, from the calculation unit 520, data of the 3D model (Fig. 21) included in the calculation result of the three-dimensional shape of the object. Then, the combining unit 630 determines a pixel value related to each point of the 3D model of the obj ect based on the plurality of pieces of image data by the ray tracing method. In this way, when the pixel value at each point of the 3D model is determined, the combining unit 630 can obtain image data (sometimes referred to as combined image data) indicating at least part of the three-dimensional shape of the object.

The combining unit 630 may output the combined image data to a display or the like. Alternatively, the combining unit 630 may store the combined image data in a storage device (not illustrated).

An advantage of the combined image data is that the user can see various sides of the object to be measured (for example, the head of a person). For example, the left side of the head of the person is photographed by the right photographing unit 20a, and the right side of the head of the person is photographed by the left photographing unit 20b, whereby image data in which the shape of the left ear of the person can be known and image data in which the shape of the right ear of the person can be known are obtained. By combining these pieces of image data, combined image data in which the shapes of both ears can be viewed is obtained.

### (Modification)

As a modification, a configuration for correcting a plurality of pieces of image data before the combining unit 630 combines the plurality of pieces of image data will be described.

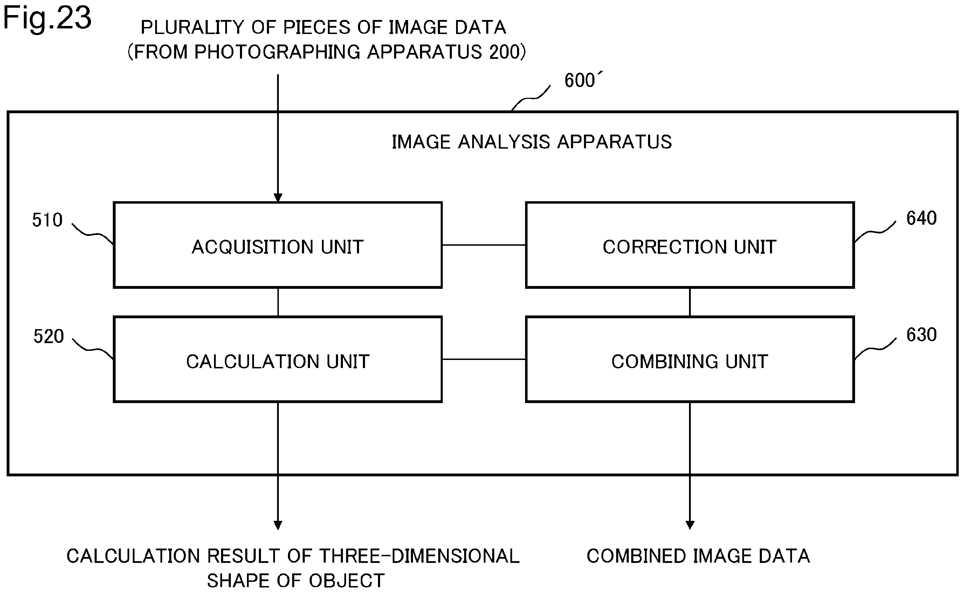

Fig. 23 is a block diagram illustrating a configuration of an image analysis apparatus 600' that is a modification of the image analysis apparatus 600 according to the sixth example embodiment. As illustrated in Fig. 23, the image analysis apparatus 600' further includes a correction unit 640 in additionto the acquisition unit 510, the calculation unit 520, and the combining unit 630.

The image analysis apparatus 600' according to the present modification is different from the image analysis apparatus 600 according to the sixth example embodiment in that it further includes the correction unit 640.

The correction unit 640 corrects an inconsistency between the plurality of pieces of image data based on a deviation in adjustment of the orientation of the camera 22. The correctionunit 640 is an example of the correction means. In the sixth present example embodiment, the combining unit 630 (an example of the combining means) combines a plurality of pieces of corrected image data.

The position and orientation of the camera 22 are determined by adjustment of the alignment, but there may be a deviation from the reference. In the present modification, the correction unit 640 corrects the influence of the deviation by calibration, thereby obtaining image data in a case where the camera 22 is at the reference position and direction. By combining the corrected image data, the combining unit 630 can obtain image data with less inconsistency than that in a case where the image data before correction is combined. That is, image data indicating the accurate three-dimensional shape of the obj ect can be obtained.

In an example, first, the correction unit 640 assumes that the alignment adjustment (Fig. 16) is accurate, and identifies a region viewed in common between the field of view of the camera 22 included in the right photographing unit 20a and the field of view of the camera 22 included in the left photographing unit 20b. Then, the correction unit 640 compares the pixel values in the identified region among the plurality of pieces of image data obtained by photographing the same obj ect from different directions, and calculates the size of the region in which the pixel values do not match with each other. Next, the correctionunit 640 searches for a combination of parameters with which the size of the region where the pixel values do not match is the smallest, with the orientation of the camera 22 included in the right photographing unit 20a as a first parameter and the orientation of the camera 22 included in the left photographing unit 20b as a second parameter.

In an example, the correction unit 640 calculates the actual orientation for each of the camera 22 included in the right photographing unit 20a and the camera 22 included in the left photographing unit 20b based on the first parameter and the second parameter identified in the above-described procedure. Then, the correction unit 640 calibrates the image data acquired by the right photographing unit 20a based on the calculation result of the orientation of the camera 22 included in the right photographing unit 20a. The correction unit 640 calibrates the image data acquired by the right photographing unit 20b based on the calculation result of the orientation of the camera 22 included in the right photographing unit 20b.

In one modification, the correction unit 640 may present how much the actual orientation of the camera 22 deviates from the reference by any means for each of the camera 22 included in the right photographing unit 20a and the camera 22 included in the left photographing unit 20b, or may request the user to adjust the alignment of the camera 22.

The correction unit 640 outputs the plurality of pieces of image data corrected as described above to the combining unit 630. As described above, in the present modification, the combining unit 630 combines the plurality of pieces of image data corrected by the correction unit 640 instead of the plurality of pieces of image data acquired by the acquisition unit 510.

### [Hardware configuration]

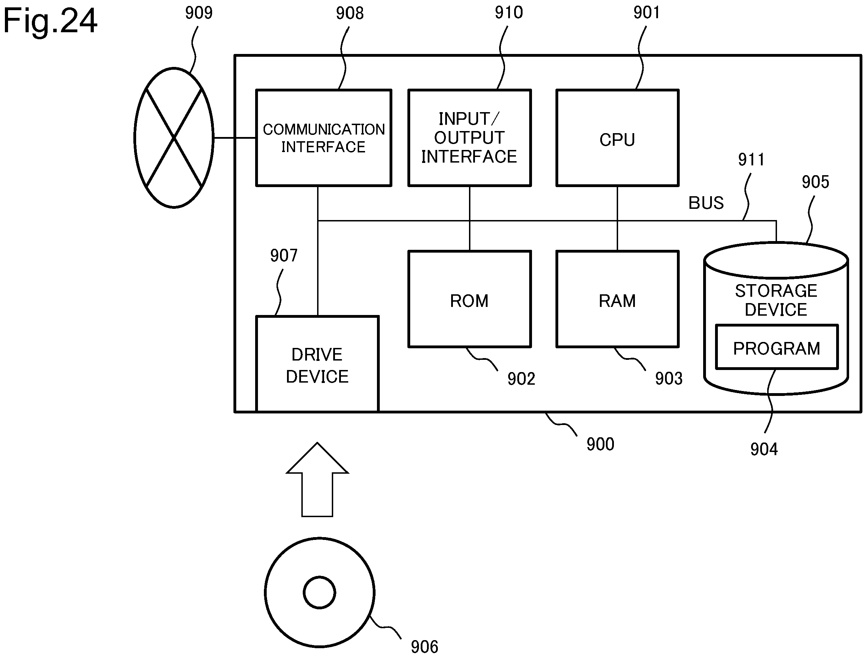

Each component of the image analysis apparatus 500, 600, 600' described in the fifth to sixth example embodiments and the modifications represents a functional unit block. Some or all of these components are implemented by an information processing device 900 as illustrated in Fig. 24, for example. Fig. 24 is a block diagram illustrating an example of a hardware configuration of the information processing device 900.

As illustrated in Fig. 24, the information processing device 900 includes the following configuration as an example.
- A processor 901
- A read only memory (ROM) 902
- A random access memory (RAM) 903
- A program 904 loaded into RAM 903
- A storage device 905 storing program 904
- A drive device 907 that reads and writes recording medium 906
- A communication interface 908 connected to a communication network 909
- An input/output interface 910 for inputting/outputting data
- A bus 911 connecting respective components

The above-described processor 901 may be a central processing unit (CPU). Alternatively, the processor 901 may be a graphics processing unit (GPU), a field-programmable gate array (FPGA), a demand-side platform (DSP), or an application specific integrated circuit (ASIC).

The components of the image analysis apparatus 500, 600, 600' described in the fifth to sixth example embodiments are implemented by the CPU 901 reading and executing a program 904 that implements these functions. The program 904 for achieving the function of each component is stored in the storage device 905 or the ROM 902 in advance, for example, and the CPU 901 loads the program into the RAM 903 and executes the program as necessary. The program 904 may be supplied to the CPU 901 via the communication network 909, or may be stored in advance in the recording medium 906, and the drive device 907 may read the program and supply the program to the CPU 901.

### [Supplementary Note]

Some or all of the above example embodiments may be described as the following Supplementary Notes, but are not limited to the foll owing.

### (Supplementary Note 1)

A photographing apparatus including
a plurality of photographing units each of which includes a camera; and
a base to which the plurality of photographing units is attached, wherein
the plurality of photographing units is allowed to adjust alignment of the respective cameras independently of each other.

### (Supplementary Note 2)

The photographing apparatus according to Supplementary Note 1, wherein
each of the photographing units includes a main body connected to the base, wherein
the camera is fixed to the main body, and wherein
an orientation of the camera is adjusted with reference to the base.

### (Supplementary Note 3)

The photographing apparatus according to Supplementary Note 2, wherein
the main body of each of the photographing units has a plurality of screw holes, wherein
the camera is fixed to the main body by screws inserted into the camera through the plurality of screw holes, and wherein
a diameter of at least one of the screw holes is larger than a thickness of the corresponding screw passing through the at least one of the screw holes.

### (Supplementary Note 4)

The photographing apparatus according to Supplementary Note 3, wherein
an orientation of the camera is allowed to be adjusted by moving the corresponding screw within a range of a diameter of the at least one of the screw holes.

### (Supplementary Note 5)

The photographing apparatus according to any one of Supplementary Notes 2 to 4, wherein
a fitting means to be fitted to the base is attached to the main body of each of the photographing units, and wherein
there is a width at a position of the main body to which the fitting means is attachable.

### (Supplementary Note 6)

The photographing apparatus according to Supplementary Note 5, wherein
an orientation of each of the photographing units is allowed to be adjusted on the base by changing a position of the fitting means attached to the main body.

### (Supplementary Note 7)

The photographing apparatus according to any one of Supplementary Notes 1 to 6, wherein
the plurality of photographing units includes a set of two photographing units that photographs a same object from different directions.

### (Supplementary Note 8)

The photographing apparatus according to any one of Supplementary Notes 1 to 7, wherein
the plurality of photographing units is both attached to the base.

### (Supplementary Note 9)

A photographing unit included in the photographing apparatus according to any one of Supplementary Notes 1 to 8.

### (Supplementary Note 10)

The photographing unit according to Supplementary Note 9, further including
a projector that projects a pattern by light onto an obj ect to be photographed by the photographing unit.

### (Supplementary Note 11)

The photographing unit according to Supplementary Note 9 or 10, further including
a light source that irradiates an obj ectto be photographed by the photographing unit.

### (Supplementary Note 12)

An image analysis apparatus including
an acquisition means configured to acquire, from the photographing apparatus according to any one of Supplementary Notes 1 to 6, a plurality of pieces of image data obtained by the plurality of photographing units photographing a same obj ect from different directions, and
a calculation means configured to calculate at least part of a three-dimensional shape of the obj ect based on the plurality of pieces of image data.

### (Supplementary Note 13)

The image analysis apparatus according to Supplementary Note 12, further including
a combining means configured to generate image data indicating a three-dimensional shape of the object by combining the plurality of pieces of image data.

### (Supplementary Note 14)

The image analysis apparatus according to Supplementary Note 13, further including
a correction means configured to correct an inconsistency between the plurality of pieces of image data based on a deviation in adjustment of an orientation of the camera, wherein
the combining means combines the plurality of pieces of corrected image data.

(Supplementary Note 15) A three-dimensional shape measuring system including
the photographing apparatus according to any one of Supplementary Notes 1 to 6, and
the image analysis apparatus according to any one of Supplementary Notes 12 to 13.

### [Industrial Applicability]

In an example, the present disclosure can be used in a photographing apparatus including a plurality of cameras and capable of photographing an object from different directions.

### [Reference signs List]

- 1: three-dimensional shape measuring system
- 20a: right photographing unit
- 20b: left photographing unit
- 21: main body
- 22: camera
- 25: fitting portion
- 30: base
- 200: photographing apparatus
- 500: image analysis apparatus
- 510: acquisition unit
- 520: calculation unit
- 600: image analysis apparatus
- 600': image analysis apparatus
- 630: combining unit
- 640: correction unit

## Claims

1. A photographing apparatus comprising:
a plurality of photographing units each of which includes a camera; and
a base to which the plurality of photographing units is attached, wherein
the plurality of photographing units is allowed to adjust alignment of the respective cameras independently of each other.

2. The photographing apparatus according to claim 1, wherein
each of the photographing units includes a main body connected to the base, wherein
the camera is fixed to the main body, and wherein
an orientation of the camera is adjusted with reference to the base.

3. The photographing apparatus according to claim 2, wherein
the main body of each of the photographing units has a plurality of screw holes, wherein
the camera is fixed to the main body by screws inserted into the camera through the plurality of screw holes, and wherein
a diameter of at least one of the screw holes is larger than a thickness of the corresponding screw passing through the at least one of the screw holes.

4. The photographing apparatus according to claim 3, wherein
an orientation of the camera is allowed to be adjusted by moving the corresponding screw within a range of a diameter of the at least one of the screw holes.

5. The photographing apparatus according to any one of claims 2 to 4, wherein
a fitting means to be fitted to the base is attached to the main body of each of the photographing units, and wherein
there is a clearance at a position of the main body to which the fitting means is attachable.

6. The photographing apparatus according to claim 5, wherein
an orientation of each of the photographing units is allowed to be adjusted on the base by changing a position of the fitting means attached to the main body.

7. The photographing apparatus according to any one of claims 1 to 6, wherein
the plurality of photographing units includes a set of two photographing units that photographs a same object from different directions.

8. The photographing apparatus according to any one of claims 1 to 7, wherein
the plurality of photographing units is both attached to the base.

9. A photographing unit included in the photographing apparatus according to any one of claims 1 to 8.

10. The photographing unit according to claim 9, further comprising:
a projector that projects a pattern by light onto an obj ect to be photographed by the photographing unit.

11. The photographing unit according to claim 9 or 10, further comprising:
a light source that irradiates an obj ect to be photographed by the photographing unit.

12. An image analysis apparatus comprising:
an acquisition means configured to acquire, from the photographing apparatus according to any one of claims 1 to 8, a plurality of pieces of image data obtained by the plurality of photographing units photographing a same obj ect from different directions; and
a calculation means configured to calculate at least part of a three-dimensional shape of the obj ect based on the plurality of pieces of image data.

13. The image analysis apparatus according to claim 12, further comprising:
a combining means configured to generate image data indicating a three-dimensional shape of the object by combining the plurality of pieces of image data.

14. The image analysis apparatus according to claim 13, further comprising:
a correction means configured to correct an inconsistency between the plurality of pieces of image data based on a deviation in adjustment of an orientation of the camera, wherein
the combining means combines the plurality of pieces of corrected image data.

15. A three-dimensional shape measuring system comprising:
the photographing apparatus according to any one of claims 1 to 6; and
the image analysis apparatus according to any one of claims 12 to 13.
